# EUROPEAN PATENT APPLICATION

(11) **EP 1 903 064 A1**
(43) Date of publication of application: **26.03.2008**
(21) Application number: 06254871.4
(22) Date of filing: 20.09.2006
(51) Int. Cl.: C08F 279/02

(54) **Process for producing a polystyrene**

(71) Applicant: INEOS EUROPE LIMITED, Lyndhurst, Hampshire, SO43 7FG (GB)
(72) Inventor: The designation of the inventor has not yet been filed
(74) Representative: King, Alex

(57) **Abstract**

The present invention relates to a process for producing a polystyrene, in particular a process for producing a high impact polystyrene, which process comprises:
1) introducing into a pre-inversion reactor a styrene monomer, a rubber polymer and a grafting promoter, and polymerising the styrene monomer to form a polystyrene, said polymerisation being performed to a conversion of between 70 and 100% of the phase inversion start point of the styrene/polystyrene/rubber polymer mixture formed,
2) splitting the formed styrene/polystyrene/rubber polymer mixture to produce a first stream comprising 70 to 95% by weight of the formed mixture and a second stream comprising the balance of the formed mixture,
3) introducing the first stream into a second reactor wherein further styrene polymerisation is performed to cause phase inversion the first stream,
4) mixing the phase inverted first stream from step (3) with the second stream from step (2) at a shear rate of 5 to 30 s⁻¹ in a static in-line mixer to cause a second phase inversion and produce a high impact polystyrene with a bimodal distribution of rubber particles.

## Description

The present invention relates to a process for producing a polystyrene, in particular a high impact polystyrene.

High impact polystyrene is typically made by inclusion of a rubber polymer in the polystyrene. The rubber polymer is usually present during the formation of the polystyrene, a typical process comprising providing a solution of the rubber polymer in styrene and polymerising the styrene monomer. As polymerisation occurs it is desired that grafting of the polystyrene and rubber polymer occurs. The rate of grafting (compared to homopolymerisation) is temperature dependent and is also usually enhanced by use of a grafting catalyst or initiator.

During initial stages of the polymerisation reaction nodules of polystyrene form in a continuous phase of the rubber polymer solution. As polymerisation continues, the polystyrene phase becomes more continuous, eventually leading to a continuous polystyrene phase in which the rubber polymer is present as nodules. The change from continuous rubber polymer phase to continuous polystyrene phase is known as a "phase inversion". A more detailed description of the phase inversion can be found in US 4,777,210.

Control of the polymerisation process, particularly during the phase inversion, influences the size of polymer particles formed which will significantly influence the properties of the high impact polystyrene formed.

Thus, US 4,777,210 describes a process for the production of a high impact polystyrene in which the initial reaction mixture is reacted in a pre-inversion reactor to a point below the point at which phase inversion begins to occur (phase inversion start point), and subsequently passed to a second reactor in series in which the phase inversion occurs. The process of US 4,777,210 produces a monomodal high impact polystyrene with high reproducibility of polymer particle size.

It is also known that bimodal high impact polystyrenes can have improved properties compared to monomodal polystyrenes. Such polystyrenes can be produced by separately preparing first and second polystyrenes with different polymer particles sizes therein, and subsequently mixing said polystyrenes, as described, for example, in US 5,240,993. However, such a process requires at least two (highly controlled) parallel phase inversion reactors in which the respective phase inversions occur. If such a process is combined with the teaching of US 4,777,210 three or even four reactors would be required (one or two for pre-inversion, depending on whether also done in parallel and two subsequent phase inversion reactors for the separate phase inversions prior to mixing).

An improved process for producing a high impact polystyrene has now been found, in which highly controlled and reproducible bi-modal high impact polystyrenes can be formed using a single pre-inversion reactor and a single phase inversion reactor.

Thus, the present invention provides a process for producing a bimodal high impact polystyrene, which process comprises:
1) introducing into a pre-inversion reactor a styrene monomer, a rubber polymer and a grafting promoter, and polymerising the styrene monomer to form a polystyrene, said polymerisation being performed to a conversion of between 70 and 100% of the phase inversion start point of the styrene/polystyrene/rubber polymer mixture formed,
2) splitting the formed styrene/polystyrene/rubber polymer mixture to produce a first stream comprising 70 to 95% by weight of the formed mixture and a second stream comprising the balance of the formed mixture,
3) introducing the first stream into a phase inversion reactor wherein further styrene polymerisation is performed to cause phase inversion the first stream,
4) mixing the phase inverted first stream from step (3) with the second stream from step (2) at a shear rate of 5 to 30 s⁻¹ in a static in-line mixer to cause a second phase inversion and produce a high impact polystyrene with a bimodal distribution of rubber particles.

The process of the present invention results in a high impact polystyrene with a bimodal distribution of rubber particles. Relatively small rubber particles with a narrow particle size distribution are formed during the phase inversion of step (3), having a particle size less than 1.5 microns, typically of approximately 0.5 microns average. This small particle size and narrow particle size distribution are obtained by use of the first stream which has a composition already close to the phase inversion start point. This stream comprises a high ratio of rubbery phase to rubber initially present due to the presence of the grafting promoter in step (1), and has a relatively high viscosity, which allows the phase inversion of step (3) to be achieved at relatively low mixing time. The conditions in step (3) typically include a relatively high shear rate. The reaction time is suitably limited such that conversion of styrene is limited but still more than about 20% above the phase inversion end-point.

In contrast, when this stream is mixed with the second stream from step (2) in step (4), the mixing is performed at a relatively low shear rate, which creates a large particle tail. The larger particle size may be varied depending on the desired final application, but will typically be at least 2 microns, for example in the range 2 to 10 microns. For example, for high gloss/high impact product applications the larger particles should be in the range 2.5 to 5 microns, whereas for ESCR product applications larger particles are preferred, typically 6 to 9 microns.

Negligible further styrene monomer conversion occurs in step (4), the second phase inversion (of the second stream) occurring as a result of the overall composition having an excess of polystyrene compared to the phase inversion end-point (which is a result of the second stream having a composition close to the phase inversion start point and being mixed with a much larger stream which has a composition beyond the phase inversion end-point). The second phase inversion being performed in a static in-line mixer provides a well controlled phase inversion without the complications (and costs) of using a second phase inversion reactor.

The reaction of step (1) is a pre-inversion reaction.

Suitable styrene monomers, rubber polymers and grafting promoters are known to the person skilled in the art, for example as described in US 5,240,993.

Preferred styrene monomers are styrene itself, alphamethylstyrene and ring-substituted styrenes, The styrene polymerization may be a styrene copolymerization with at least one comonomer chosen from vinylaromatic monomers other than styrene, for example from α-methylstyrene, a styrene halogenated in the aromatic ring, and a styrene alkylated in the aromatic ring.

Preferred rubber polymers are natural rubber, styrene-butadiene rubber, polybutadiene and polyisoprene. The preferred rubber polymer is polybutadiene.

Preferred grafting promoters are chosen in particular from peroxides, hydroperoxides, peroxycarbonates, percetals, peresters and azo compounds. Peroxides, such as t-butylperoxy-2-ethylhexanoate (TBPE) and t-butylperbenzoate (TBPB), are most preferred.

Other components may also be present in the solution. For example, a solvent or reaction diluent may be present, typically chosen from benzene and alkylbenzenes (or alkylated derivatives of benzene), in particular chosen from toluene, ethylbenzene, orthoxylene, metaxylene, paraxylene and cumene. As (non-limiting) examples of suitable additives, the solution may also include one or more additives chosen from: chain stoppers, such as mercaptans or the dimer of alpha-methylstyrene, plasticizers and antioxidants.

The pre-inversion reactor is preferably a back-mixed reactor, for example a back mixed loop reactor or, more preferably, a continuously stirred tank reactor (CSTR).

Typically, the styrene to rubber polymer ratio prior to polymerisation in step (1) is within the range 85:15 to 98:2 (by weight).

The temperature in the pre-inversion reactor is typically fairly low (relative to step (3)). Lower temperature favours better grafting of the rubber polymer and polystyrene, although too low a temperature reduces the rate of reaction too much. The preferred temperature for step (1) is generally in the range 80 to 120°C, more preferably in the range 80 to 110°C.

The conversion of styrene to react 70 to 100% of the phase inversion start point will vary depending on the actual styrene monomer and rubber polymer, but typically the phase inversion start-point corresponds to a composition of approximately 1:1 polystyrene to rubber polymer.

In step (3) the first phase inversion occurs. As noted the conditions in step (3) use a relatively high shear rate, but the mixing time is suitably limited such that conversion of styrene is limited but still more than about 20% above the phase inversion end-point.

The phase inversion reactor is preferably a back-mixed reactor, for example a back mixed loop reactor or, more preferably, a continuously stirred tank reactor (CSTR).

The temperature in the phase inversion reactor is generally above that in the pre-inversion reactor and is typically in the range 100 to 130°C

The shear rate is typically 20 to 50 s⁻¹, preferably 20 to 40 s⁻¹, and should be higher than the shear rate in subsequent step (4).

The conversion is preferably increased to at least 20% above the phase inversion end-point, for example in the range 20 to 50%. The conversion typically corresponds to a styrene conversion of 15 to 40% (dependent on styrene to polymer ratio in initial feed) and results in a composition of at least 2:1 polystyrene to rubber polymer.

The required conversion is typically achieved by having a reaction time less than 2 minutes, for example in the range 0.5 to 2 minutes.

In step (4) a second phase inversion occurs. Step (4) uses a static in-line mixer and provides a significantly simplified process compared to use of a second "conventional" phase inversion reactor. In particular, the phase inversion is "controlled" by the compositions of the respective streams and the shear rate of 5 to 30 s⁻¹. Additional heat need not be applied in step (4), the temperature of step (4) being determined by the temperatures of the respective mixed streams. The temperature is typically less than 120°C, for example in the range 110 to 120°C. The residence time in step (4) is typically less than 2 minutes, for example in the range 0.5 to 2 minutes.

After step (4), the high impact polystyrene with a bimodal distribution of rubber particles will still be in the form of a styrene/polystyrene/rubber polymer mixture. It is believed that the particle sizes are determined by the inversion steps and post-inversion treatment will not significantly influence these sizes. Therefore, "conventional" treatment steps, including further styrene conversion (typically to at least 80% conversion in total) and devolatilisation can be applied. Such process steps are described, for example, in US 4,777,210 and US 5,240,993. Preferably, further styrene conversion is performed in a set of multiple reaction stages in which any shear applied is less than the shear rate from step (4), preferably less than 5 s⁻¹, more preferably less than 1 s⁻¹. Preferably, the devolatilisation is performed in a set of at least two stages in which increasing heating and increasing vaccum are successively applied. A preferred process and apparatus is described in WO 2004/020482.

One further advantage of the present invention is that it may be performed in an apparatus which is conventionally used for producing monomodal polystyrene, such as that described in US 4,777,210, with only relatively minor modifications, namely to add means to separate a portion (5 to 30%) of the pre-inverted stream and a static in-line mixer to mix the separated portion back with the product from the phase inversion reactor. Correspondingly, the apparatus used for the process of the present invention can be readily switched to produce monomodal polystyrene simply by not splitting a second stream in step (2). In this case all of the pre-inverted stream is subsequently phase inverted in the phase inversion reactor to produce a monomodal polystyrene as described in US 4,777,210.

## Claims

1. A process for producing a high impact polystyrene, which process comprises:
1) introducing into a pre-inversion reactor a styrene monomer, a rubber polymer and a grafting promoter, and polymerising the styrene monomer to form a polystyrene, said polymerisation being performed to a conversion of between 70 and 100% of the phase inversion start point of the styrene/polystyrene/rubber polymer mixture formed,
2) splitting the formed styrene/polystyrene/rubber polymer mixture to produce a first stream comprising 70 to 95% by weight of the formed mixture and a second stream comprising the balance of the formed mixture,
3) introducing the first stream into a second reactor wherein further styrene polymerisation is performed to cause phase inversion the first stream,
4) mixing the phase inverted first stream from step (3) with the second stream from step (2) at a shear rate of 5 to 30 s⁻¹ in a static in-line mixer to cause a second phase inversion and produce a high impact polystyrene with a bimodal distribution of rubber particles.

2. The process of claim 1 wherein rubber particles having a particle size less than 1.5 microns are formed in step (3).

3. The process according to claim 1 or claim 2 wherein rubber particles having a particle size in the range 2 to 10 microns are formed in step (4).

4. The process according to any one of the preceding claims wherein in step (3) the conversion of styrene is more than about 20% above the phase inversion end-point.
